Europäisches Patentamt

European Patent Office

Office européen des brevets

(19)

(11) Numéro de publication : **0 384 027 B1**

(12) **FASCICULE DE BREVET EUROPEEN**

(45) Date de publication du fascicule du brevet :
**19.11.92 Bulletin 92/47**

(21) Numéro de dépôt : **89123352.0**

(22) Date de dépôt : **18.12.89**

(51) Int. Cl.⁵ : **F16D 25/04**

(54) Embrayage à couplage élastique sur une machine à transformer des éléments en plaques.

(30) Priorité : **20.02.89 CH 593/89**

(43) Date de publication de la demande :
**29.08.90 Bulletin 90/35**

(45) Mention de la délivrance du brevet :
**19.11.92 Bulletin 92/47**

(84) Etats contractants désignés :
**AT BE DE ES FR GB IT LU NL SE**

(56) Documents cités :
**DE-A- 1 807 838**
**DE-A- 2 453 976**
**DE-A- 2 845 879**
**FR-A- 2 560 310**
**GB-A- 2 189 297**
**US-A- 1 893 593**

(73) Titulaire : **BOBST S.A.**
**Case Postale**
**CH-1001 Lausanne (CH)**

(72) Inventeur : **Schmutz, Bernard**
**Chemin du Chatel 18**
**CH-1806 St. Légier (CH)**

(74) Mandataire : **Colomb, Claude**
**BOBST S.A., Service des Brevets, Case**
**Postale**
**CH-1001 Lausanne (CH)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Description

La présente invention est relative à un embrayage monté à la sortie du moteur principal dans une machine à transformer des éléments en plaques tels que papier fort, carton plat ou ondulé. De par les puissances mises en jeu, un tel embrayage est usuellement actionné par un fluide agissant sur une membrane qui déplace selon un axe un organe d'embrayage comportant des surfaces de friction. Plus particulièrement, le couplage entre l'organe d'embrayage et son axe de rotation est élastique.

Par principe, un embrayage comprend une flasque solidaire d'un premier arbre ou volant et un plateau supportant un disque de friction monté sur un second arbre coaxial au premier (ou coaxial au volant) de telle sorte que ce plateau soit solidaire en rotation mais mobile axialement par rapport à ce second arbre. Comme on peut aisément le comprendre, l'action d'embrayer consiste alors à déplacer le plateau en direction de la flasque jusqu'à ce que son disque de friction entre en contact avec cette même flasque. Les forces de friction apparaissant au niveau du contact disque de friction/flasque permettent une transmission du couple de rotation du premier arbre (ou volant) menant au second arbre mené (ou inversément si c'est le second arbre qui est menant). La situation permanente de l'embrayage est habituellement assurée par des ressorts ou autres moyens de rappel, et la situation temporaire est réalisée par un dispositif mécanique soit purement cinématique soit impliquant un fluide (air comprimé ou hydraulique). Par exemple, dans un embrayage d'automobile devant rester en permanence engagé, des ressorts radiaux partant d'un moyeu coulissant le long du second arbre et reliés à des pivots sur le pourtour interne du carter appuient contre la face arrière du plateau en direction de la flasque reliée au moteur. Par action sur la pédale, on déplace le moyeu vers le plateau ce qui, par effet de levier des ressorts, retire ce plateau hors de la flasque par translation le long du second arbre.

Lorsque des puissances importantes sont mises en jeu, il convient de dédoubler l'embrayage qui comprend alors deux flasques maintenues parallèles et écartées l'une par rapport à l'autre par des entretoises disposées sur leur pourtour, cet ensemble étant solidaire coaxialement du premier arbre ou volant. Cet embrayage comprend aussi un plateau et un contre-plateau monté coaxialement sur le second arbre entre les deux flasques. Usuellement, ces plateaux sont maintenus rapprochés l'un par rapport a l'autre, donc débrayés, par un système de ressorts et des pistons sont prévus entre ce plateau et contre-plateau pour les écarter à volonté lorsqu'un embrayage est voulu. De cette manière, si un problème apparaît sur la machine, notamment sur le circuit hydraulique, les moyens de rappel libèrent automatiquement l'embrayage.

Dans les deux exemples mentionnés précédemment, on constate l'importance d'un bon coulissement du ou des plateaux supportant les disques de friction d'embrayage par rapport à leur arbre de rotation. Ceci est actuellement réalisé en taillant d'une part sur tout le pourtour d'une portée de l'arbre une suite de dents longitudinales. On taille d'autre part sur la tranche circulaire interne du ou des plateaux des dents en correspondance à celles taillées sur l'arbre. On peut alors enfiler le ou les plateaux le long de l'arbre engageant ainsi la couronne dentée interne du plateau dans la portée dentée de l'arbre. Ainsi ce plateau est-il solidaire en rotation mais reste libre en coulissement.

On minimise les problèmes pouvant surgir à ce niveau en rectifiant très précisément les dents lors de leur taille pour éliminer si possible tout jeu entre les deux pièces. De plus, la portée du second arbre est soigneusement graissée pour réduire autant que possible les forces de friction apparaissant à ce niveau lors de la translation du plateau.

Satisfaisant jusqu'à de moyennes puissances, ce mode de couplage de plateaux sur l'arbre devient inadapté pour des embrayages de forte puissance. En effet, on constate d'abord un matage des dentures soit la création de jeux. Lorsque ces jeux sont devenus suffisamment importants, ceux-ci génèrent des chocs lors des embrayages suivants, chocs se traduisant par des vibrations se répercutant de manière néfaste sur l'ensemble de la machine. On constate ensuite, à l'intérieur des jeux ainsi créés, une corrosion de contact qui augmente sensiblement les forces de friction à vaincre pour déplacer ces plateaux soit par les moyens actifs (piston, fourche ...) ou les moyens réactifs de rappel. Ce phénomène résulte en un temps plus long de réponse de l'embrayage à la commande, ce qui est particulièrement dangereux lors de débrayage d'urgence.

L'objet de cette invention est de résoudre les problèmes précités et plus particulièrement dans un embrayage utilisé dans une machine à transformer des éléments en plaques. Un tel embrayage doit être exempt de problèmes dûs à des jeux entre plateau et moyeu pour obtenir une grande rigidité de torsion : soit une réponse plus nette de la machine lors des démarrages ou arrêts et une diminution notable des risques de vibration. De plus, le temps de réponse de l'embrayage doit être court, notamment par abaissement voire disparition des forces de frottement pouvant se développer. Enfin, un tel embrayage ne doit nécessiter des réglages ou des remplacements de pièces qu'après de longues périodes et ce par une utilisation accrue des disques de friction due à une course plus importante des plateaux le long de leur arbre.

On connait des documents DE 1 807 838 et DE 2 845 879 des embrayages comprenant :
- deux flasques inclinées l'une vers l'autre formant ensemble un cône, l'une des flasques étant solidaire coaxialement au premier arbre ou volant,

- un plateau et un contre-plateau de diamètre inférieur aux flasques entre lesquelles ils sont situés, ce plateau et contre-plateau étant enfilés par-dessus un moyeu claveté sur le second arbre auquel ils sont reliés par des pièces transversales aptes à fléchir de telle sorte qu'ils soient solidaires en rotation mais mobiles en translation axialement par rapport à ce moyeu, ce plateau et contre-plateau supportant chacun un disque de friction sur la face supérieure inclinée en vis-à-vis de leurs flasques respectives,

- au moins une chambre extensible sous la pression d'un fluide et disposée entre le plateau et contre-plateau permettant de les écarter l'un par rapport à l'autre afin d'engager leurs disques de friction contre leurs flasques respectives.

- des moyens de rappel rapprochant le plateau et le contre-plateau l'un par rapport à l'autre en l'absence de fluide sous pression dans la ou les chambres extensibles et dégageant les disques de friction de leurs flasques,

Toutefois, dans l'embrayage selon le premier document, la liaison entre le moyeu et un plateau est réalisé par des plaques-biellettes relativement courtes et articulées en chaque extrémité sur des rotules caoutchoutées prises de part et d'autre par des paires de joues protubérant respectivement du moyeu et du bord interne des plateaux. Compte-tenu d'une part de l'encombrement imposant des épaisseurs limitées pour les plaques-biellettes et les joues et d'autre part du montage sur rotules caoutchoutées, ce type d'embrayage ne peut supporter des transmissions de couples particulièrement importants.

Dans l'embrayage selon le second document, le moyeu est constitué d'un simple cylindre complété en ses deux extrémités par des couronnes, et les supports de plateaux, constituant ensemble un piston/cylindre annulaire, sont enfilés sur le cylindre entre les couronnes. Compte-tenu de la place disponible, il n'a été prévu qu'une série de lamelles individuelles pour réaliser la liaison entre ce moyeu et chaque plateau, ce qui limite grandement le couple maximum transmissible.

Il est à noter que, de ce fait, les surfaces de friction sont, dans les deux cas, réduites à des pourtours coniques de plateaux et contre-plateaux en vis-à-vis de flasques inclinées formant un pourtour conique.

Le but de la présente invention est un embrayage du type décrit précédemment pouvant transmettre des puissances particulièrement importantes, notamment lorsque cet embrayage est monté à la sortie d'un moteur principal dans une machine à transformer des éléments en plaques.

Ce but est réalisé du fait que le moyeu est essentiellement cylindrique avec un pourtour présentant, vu en coupe transversale, une forme polygonale aux angles arrondis et aux côtés concaves, le plateau et contre-plateau présentant un pourtour interne conjugué polygonal de dimensions légèrement plus grandes que celles du pourtour du moyeu ; et du fait que le couplage du plateau et du contre-plateau sur le moyeu est réalisé par l'intermédiaire d'une série d'empilages de lamelles identiques qui relie d'une part la face frontale du moyeu au niveau de ses angles arrondis à la face frontale du plateau au niveau des milieux des côtés concaves, et d'autre part la face antérieure du moyeu également au niveau de ses angles arrondis à la face antérieure du contre-plateau aussi au niveau des milieux des côtés concaves.

Selon un mode de réalisation préférentiel, le pourtour du moyeu tel que vu en coupe transversale est sensiblement équivalent à la forme définie par l'équation en coordonnées polaires

$$P(r) = R1 + R2 \sin(n\Theta)$$

dans laquelle $\Theta$ prend des valeurs comprises entre 0 et 2 pi, n est un nombre entier compris entre 2 et 6 inclus et le rapport R1/R2 est compris entre 0,2 et 0,35.

Avantageusement, la distance entre l'axe du second arbre et l'axe du cylindre autour duquel sont empilées des lamelles au niveau de l'un des angles du moyeu est comprise entre 0,4 et 0,6 fois le rayon du plateau.

Avantageusement encore, les lamelles sont maintenues écartées des faces frontales ou antérieures du moyeu ou des plateaux ainsi que des moyens de maintien de ces lamelles au moyeu ou plateaux par des écarteurs triangulaires isocèles dont l'angle au sommet, orienté vers l'axe de rotation de l'embrayage, est égal à 180°/n, n étant le nombre inclus dans la formule précédente caractérisant la forme extérieure du moyeu.

L'invention sera mieux comprise à l'étude d'un mode de réalisation pris à titre d'exemple nullement limitatif et décrit par les figures suivantes :

- la figure 1 est une vue en coupe longitudinale de l'embrayage;
- la figure 2 est une coupe transversale selon la ligne II.II de la figure 1;
- la figure 3 est une coupe transversale de l'embrayage selon la ligne III.III de la figure 1;
- la figure 4 est une vue en coupe transversale selon la ligne IV.IV de la figure 1 et
- la figure 5 est une vue en coupe des moyens de rappel forçant le plateau et le contre-plateau l'un contre l'autre.

La réalisation suivante de l'invention va maintenant être décrite dans le cadre de l'accouplement entre un volant moteur et un arbre mené dans une machine à transformer des éléments en plaques. Il est toutefois bien entendu que les concepts inclus dans la réalisation décrite ci-après peuvent être utilisés de manière équivalente dans le cas d'un arbre menant et d'un volant mené ou d'un arbre menant entraînant un second arbre coaxial et solidaire du volant, et ce à la sortie de tout moteur de puissance.

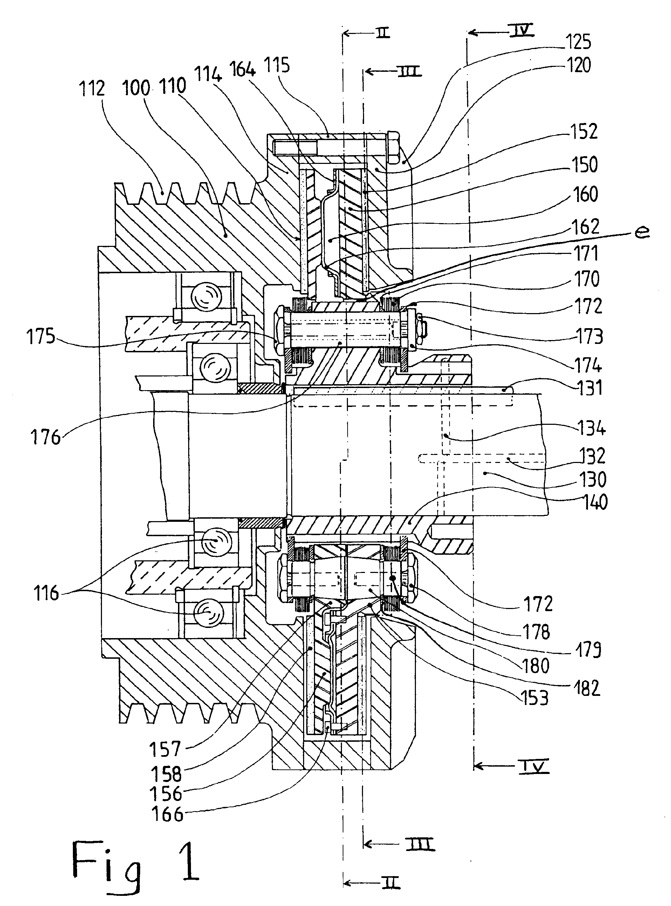

En référence à la figure 1, l'embrayage comprend un arbre 130 qui le traverse de part en part. Sur cet arbre 130 est installé coaxialement sur deux chemins de billes 116 un volant 100. Ce chemin de billes 116 désaccouple en rotation l'arbre 130 et le volant 100 qui peuvent tourner ou être arrêtés indépendamment. En sa périphérie, le volant 100 présente une suite de gorges 112 prévues pour recevoir des courroies de transmission imprimant un mouvement en rotation au volant 100. La face frontale de ce volant 100, c'est-à-dire la face à droite telle que représentée sur la figure 1, est prolongée par un rebord radial 114 orienté vers l'extérieur constituant ainsi avec la face antérieure du volant 100 une première flasque de surface utile 110.

Le rebord radial 114 est prolongé en sa périphérie par une paroi ou entretoise 115 permettant de tenir un couvercle 120 parallèle mais écarté de la première flasque. Ce couvercle 120 constitue la deuxième flasque de l'embrayage dont la face antérieure est garnie radialement d'une série d'ailettes de refroidissement 125.

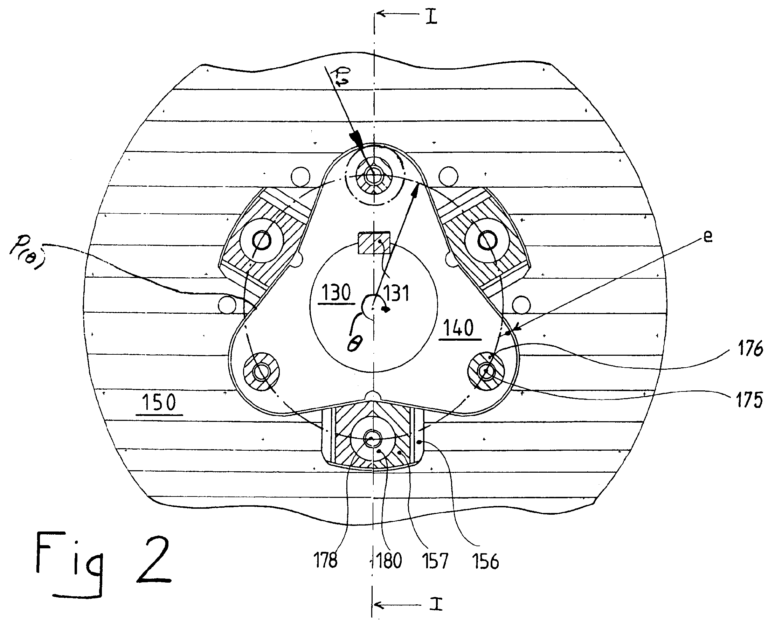

Par ailleurs, un moyeu 140 est claveté en 131 sur l'arbre 130. Ce moyeu traverse la flasque 120, reliée au rebord radial 114 au volant 100 par une bague 115. Vu en coupe transversale tel qu'illustré sur la figure 2, ce moyeu 140 présente une forme générale triangulaire dont les angles sont arrondis et les côtés légèrement concaves. En fixant comme axe d'origine de coordonnées polaires la droite I.I passant par le centre de l'axe 130 et la clavette 131, et comme centre d'origine aux coordonnées polaires le centre de ce même axe 130, alors la forme du pourtour de ce moyeu 140 peut être décrite par l'équation en coordonnées polaires :

$$P(\Theta) = R1 + R2 \sin(3\,\Theta)$$

dans lequel $\Theta$ prend des valeurs comprises entre 0 et 2 pi, R1 représente le rayon d'un cercle fondamental et R2 l'amplitude de la variation cyclique en fonction de l'angle et ce pour trois alternances donnant les trois angles arrondis du moyeu.

Toujours en relation aux figures 1 et 2, l'embrayage comporte de plus un plateau circulaire de pression 150 et un contre-plateau circulaire 156 enfilé coaxialement par dessus ce moyeu. Comme on peut mieux le constater sur la figure 2, le pourtour interne du plateau 150, dont les embases 153 sont absentes de cette figure, et du contre-plateau 156, dont seules les embases 157 sont visibles, a une forme identique à celle du moyeu 140 mais plus large créant ainsi un espacement noté e. Le plateau 150 porte sur sa face frontale, c'est-à-dire à droite tel qu'illustré sur la figure 1, un disque de friction 152 vis-à-vis de la flasque 120. De même, le contre-plateau 156 porte sur sa face antérieure, c'est-à-dire à gauche tel qu'illustré sur la figure 1, un disque de friction 158 vis-à-vis de la flasque 110 du volant 100.

Vis-à-vis du milieu de chaque côté concave du moyeu 140, le contre-plateau 156 présente une embase 157 c'est-à-dire une surépaisseur de forme générale rectangulaire. Le plateau 150 présente, lui aussi, vis-à-vis des trois embases 157 des embases correspondantes 153, mais décrochées du côté frontal. Ces embases, ou surépaisseurs, permettront d'arrimer sur ces plateaux des éléments de liaison au moyeu 140 tel qu'il sera expliqué par la suite.

Un orifice est percé en chacun des trois sommets du moyeu 140, lequel orifice est traversé d'un axe cylindrique 176 débordant de part et d'autre pour former deux portées cylindriques.

De même, l'embase 153 est traversée par un orifice conique orienté du côté frontal dans lequel vient se loger un tourillon conique 180 formé d'un tronc de cône que prolonge une portée cylindrique 179. Ce tourillon conique 180 est lui-même percé sur son axe d'un orifice taraudé. Il en est de même pour l'embase 157 à la différence toutefois que le tourillon conique 180 est orienté du côté antérieur.

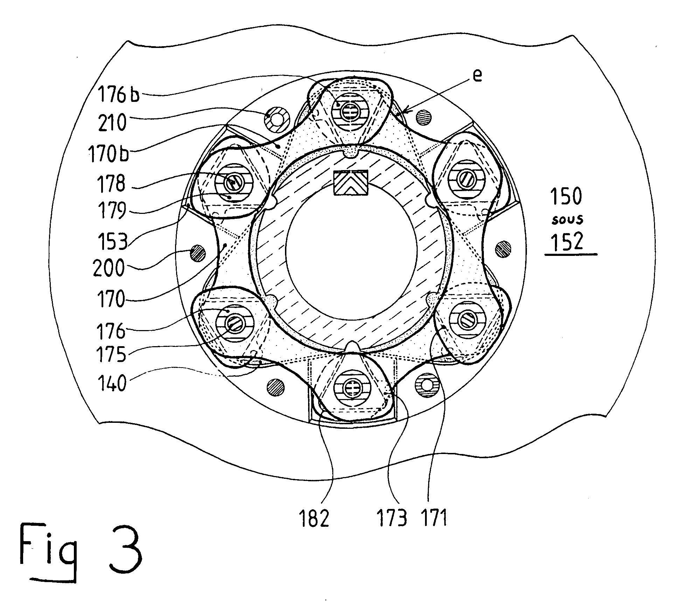

Comme on peut mieux l'observer sur les figures 1 et 3, le plateau 150 est maintenu en position au-dessus du moyeu 140 grâce à une série d'empilages de lamelles 170 reliant chaque axe cylindrique 176, au niveau des angles arrondis du moyeu 140, aux deux portées 179 des tourillons coniques 180 engagés dans les deux embases 153 qui sont situées vis-à-vis du milieu des deux côtés adjacents correspondants du moyeu 140. En d'autres termes, un premier empilage de lamelles 170 relie, dans le sens des aiguilles d'une montre, l'extrémité frontale de l'axe cylindrique 176 du premier angle du moyeu 140 à la portée 179 du tourillon conique 180 enfilé dans une embase 153 suivante du plateau 150. Puis, un second empilage de lamelles 170b relie cette même portée 179 à l'extrémité frontale de l'axe cylindrique 176b du second angle arrondi suivant du moyeu 140. Il en est ainsi de suite pour les deux autres embases et le troisième angle arrondi.

Bien visibles sur la figure 3, les empilages s'interpénètrent deux à deux au niveau de chacune des portées 179 ou extrémités de l'axe cylindrique 176, c'est-à-dire que, sur une lamelle appartenant à un premier empilage, est placée une seconde lamelle appartenant à l'empilage suivant et ainsi de suite. Compte tenu de la rigidité longitudinale de chaque lamelle élémentaire, cette liaison par succession d'empilage de lamelles permet de maintenir les embases 153 donc le plateau 150 écartés d'un espace e autour du moyeu 140.

Comme illustré sur la figure 1, une liaison par empilage successif de lamelles 170 assure de l'autre côté une liaison identique entre la face frontale du moyeu 140 et la face frontale du contre-plateau 156.

Les premières lamelles de chacun des empilages ne sont nullement directement apposées contre la face antérieure ou postérieure du moyeu et plateau ou contre-plateau, mais bien tenues dégagées par un écarteur 171 ou 182 dont la forme triangulaire équilatérale est bien visible sur la figure 3.

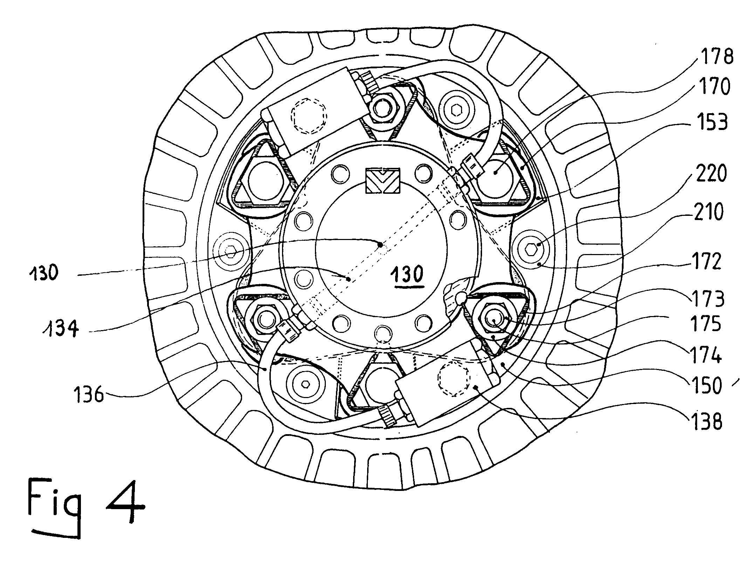

Compte tenu de la disposition hexagonale des empilages de lamelles 170, on constate que ces écarteurs équilatéraux judicieusement disposés créent pour chaque lamelle une première ligne de flexion. Du fait de l'importance de cette disposition particulière, ces écarteurs 171 ou 182 sont maintenus en position par une goupille passant au-travers d'un oeilleton 173. De manière similaire, comme on peut mieux l'observer sur les figures 1 et 4, les dernières lamelles de chaque empilage sont protégées par un écarteur également triangulaire équilatéral 172 ayant une fonction identique aux écarteurs 171, 182 décrits précédemment.

Au niveau de chaque embase 153 ou 157, les empilages de lamelles sont maintenus en position autour des portées 179 grâce à des vis à tête large 178. A l'inverse, au niveau de chacun des angles du moyeu 140, il s'est avéré plus pratique d'utiliser une vis 175 traversant l'axe cylindrique 176. La tête de cette vis 175 tient en position les lamelles du côté antérieur et les lamelles du côté frontal sont tenues grâce à une rondelle 174 et un écrou 173 engagés à l'autre extrémité de ce boulon 175.

L'embrayage selon l'invention comprend de plus un dispositif pneumatique permettant de l'actionner. Ce dispositif comprend un circuit d'amenée d'air sous pression, en l'occurrence trois bars, constitué (fig. 4) d'un conduit central 132 et de deux conduits 134 dans l'arbre 130, deux conduits flexibles 136 prolongeant les conduits 134 respectivement et amenant l'air comprimé dans deux distributeurs 138 disposés directement sur le plateau de pression 150 symétriquement par rapport à l'axe de rotation pour ne pas déséquilibrer ce plateau. Un conduit interne, non représenté, amène cet air comprimé à l'intérieur d'une chambre extensible 160 (visible sur la figure 1) constituée d'une membrane 162 plaquée contre la face antérieure du plateau 150 par une couronne 164 et des vis 166. Cette membrane peut appuyer sur la face frontale du contre-plateau 156.

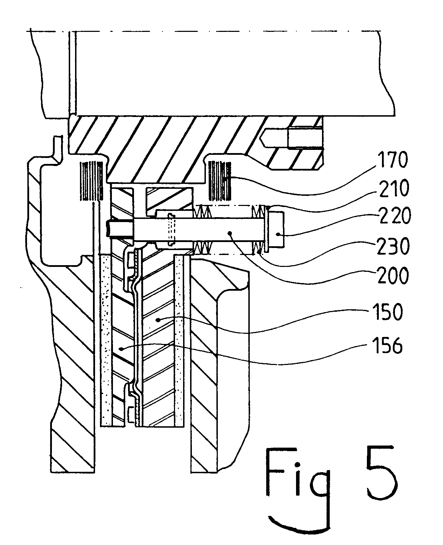

Enfin, cet embrayage comprend aussi quatre dispositifs à ressorts illustrés sur la figure 5 maintenant les plateaux serrés l'un contre l'autre en l'absence d'air comprimé dans la chambre 160. Ce dispositif comprend une tige 200 dont l'extrémité filetée est vissée dans le contre-plateau 156 et qui passe au-travers du plateau 150. Cette tige se termine par une rondelle 210 et une tête 220. Une série de rondelles élastiques 230 forme un ressort agissant entre la rondelle 210 d'une part et la face frontale du plateau de pression 150. Tel qu'illustré sur la figure 5, ce ressort 230, déjà comprimé, force la rondelle 210 et la tête 220 vers la droite donc le contre-plateau 156 aussi vers la droite. Ce ressort force simultanément le plateau 150 vers la gauche. Quatre de ces dispositifs sont disposés dans l'embrayage : les tiges 200 sont visibles sur la figure 3 alors que la rondelle 210 et la tête 220 sont visibles sur la figure 4.

L'embrayage décrit précédemment fonctionne de la manière suivante :

Sur la figure 1, la moitié inférieure représente le plateau et contre-plateau en l'état débrayé alors que la moitié supérieure présente ces mêmes plateau et contre-plateau en l'état embrayé. En effet, en l'absence de pression pneumatique dans la chambre 160, les plateaux sont maintenus l'un contre l'autre par les quatre dispositifs de rappel décrits en référence à la figure 5 et les disques de friction 152, 158 correspondants sont dégagés des flasques. Si de l'air sous pression est appliqué dans le conduit 132 et arrive dans la chambre 160, alors celle-ci se gonfle tendant à écarter ce plateau et contre-plateau l'un par rapport à l'autre. Or, compte tenu que ces deux plateaux ne sont reliés au moyeu 140 que par les empilages de lamelles flexibles latéralement (mais rigides de par leur nombre en tension et compression) et compte tenu d'autre part qu'il n'existe aucune force de friction en ces plateaux et ce moyeu de par l'écartement e maintenu, alors le plateau 150 est aisément déplacé vers la droite et le contre-plateau 156 vers la gauche jusqu'à ce que leurs disques de friction 152, 158 respectifs entrent en contact avec les faces en correspondance de la flasque 120 et 110. Le couple de rotation du volant 100 est alors transmis aux disque et plateau qui eux-mêmes le transmettent au moyeu 140 au-travers des lamelles. Ces lamelles travaillent essentiellement en traction excepté lors des désaccélérations rapides. Du fait du nombre de lamelles important de part et d'autre, des couples importants peuvent être transmis alors même que les plateaux restent en permanence "flottants" au-dessus du moyeu 140.

A l'inverse, pour désembrayer, la pression pneumatique dans la chambre 160 est relachée, et les ressorts 230 des dispositifs de rappel qui avaient préalablement été encore plus comprimés ramènent les plateaux l'un contre l'autre. Toujours du fait de l'absence de friction dans le sens longitudinal entre les plateaux et le moyeu et du fait de la flexibilité latérale des lamelles, ces ressorts 230 peuvent facilement imprimer ce mouvement de retour au plateau et contre-plateau.

Le pourtour externe, vu en coupe transversale, du moyeu 140 de l'embrayage décrit ci-dessous a une forme générale triangulaire et les pourtours internes du plateau et contre-plateau 156 ont une forme identique mais plus large. Pour des embrayages de plus faible puissance, on peut concevoir que cette forme générale soit plutôt ovale avec deux pivots de moyeux aux extrémités et deux pivots pour plateaux de côté. Alors, seulement quatre empilages de lamelles sont nécessaires de part et d'autre pour assurer la liaison. A l'inverse, pour des embrayages encore plus puissants, on peut concevoir que la forme générale soit en croix ou en étoile à 5 ou 6 branches. Il convient alors de compter 8, 10 et 12 empilages de lamelles respectivement par côté pour assurer la liaison.

Comme on a pu le constater dans la description précédente, les temps de réponse de l'embrayage sont très courts sans qu'aucun jeu, choc ou vibration ne puisse apparaître. De plus, la course de ces plateaux n'étant limitée que par la flexibilité des lamelles qui sont choisies très larges, ce dispositif permet d'utiliser les disques de friction beaucoup plus longtemps que précédemment ce qui minimise les interventions sur l'embrayage donc les arrêts de machine improductifs.

**Revendications**

1. Embrayage accouplant un premier arbre ou volant (100) à un second arbre (130) coaxial dans une machine à transformer des éléments en plaques et comprenant :

- deux flasques (110, 120) circulaires maintenues parallèles et écartées l'une par rapport à l'autre par des entretoises (115) ou une paroi circulaire qui est disposée sur la périphérie des flasques, l'une des flasques (110) étant solidaire coaxialement au premier arbre ou volant (100),

- un plateau (150) et un contre-plateau (156) circulaires de diamètre inférieur aux flasques (110, 120) entre lesquels ils sont situés, ce plateau et contre-plateau étant enfilés par-dessus un moyeu (140) claveté sur le second arbre (130) auquel ils sont reliés par des pièces transversales aptes à fléchir de telle sorte qu'ils soient solidaires en rotation mais mobiles en translation axialement par rapport à ce moyeu, ce plateau et contre-plateau supportant chacun un disque de friction (152, 158) sur la face vis-à-vis de leurs flasques respectives,

- au moins une chambre (160) extensible sous la pression d'un fluide et disposée entre le plateau (150) et contre-plateau (156) permettant de les écarter l'un par rapport à l'autre afin d'engager leurs disques de friction (152, 158) contre leurs flasques respectives,

- des moyens de rappel (230) rapprochant le plateau et le contre-plateau l'un par rapport à l'autre en l'absence de fluide sous pression dans la ou les chambres extensibles et dégageant les disques de friction de leurs flasques,

caractérisé en ce que le moyeu (140) est essentiellement cylindrique avec un pourtour présentant, vu en coupe transversale, une forme polygonale aux angles arrondis et aux côtés concaves, le plateau (150) et contre-plateau (156) présentant un pourtour interne conjugué polygonal de dimensions légèrement plus grandes que celles du pourtour du moyeu,

et en ce que le couplage du plateau et du contre-plateau sur le moyeu est réalisé par l'intermédiaire d'une série d'empilages (170) de lamelles identiques qui relie d'une part la face frontale du moyeu (140) au niveau de ses angles arrondis à la face frontale du plateau (150) au niveau des milieux des côtés concaves, et d'autre part la face antérieure du moyeu (140) également au niveau de ses angles arrondis à la face antérieure du contre-plateau (156) aussi au niveau des milieux des côtés concaves.

2. Embrayage selon la revendication 1, caractérisé en ce que les empilages (170) de lamelles identiques sont fixées par l'une de leurs extrémités sur chacune des faces du moyeu (140) par un axe cylindrique (176) traversant ledit moyeu (140) dans la zone de ses angles arrondis, ledit axe cylindrique étant traversé par une vis (175) destinée à serrer les empilages de lamelles au moyen d'une rondelle (174) et d'un écrou (173).

3. Embrayage selon la revendication 2 caractérisé en ce que les empilages (170) de lamelles identiques sont fixées, par leur autre extrémité, d'une part à la face frontale du plateau (150) au moyen d'un tourillon conique (180) prolongé d'une portée cylindrique (179), ledit tourillon conique (180) étant muni d'un taraudage dans lequel s'engage la vis (178) destinée à serrer l'empilage (170) de lamelles identiques contre ladite face frontale du plateau (150) et, d'autre part, à la face antérieure du contre-plateau (156) à l'aide d'un tourillon conique (180) semblable à celui utilisé pour fixer les empilages (170) de lamelles contre la face frontale du plateau (150).

4. Embrayage selon la revendication 2, caractérisé en ce que les empilages de lamelles (170) sont maintenus écartés des faces frontales ou antérieures du moyeu (140) ou des plateaux (150, 156) ainsi que des moyens de maintien (175, 174, 178) de ces lamelles au moyeu ou plateau par des écarteurs triangulaires isocèles (171, 172, 182) dont l'angle au sommet, orienté vers l'axe de rotation de l'embrayage, est égal à 180°/n.

**Patentansprüche**

1. Kupplung als Verbindung zwischen einer ersten Welle oder einem Schwungrad (100) und einer zweiten koaxialen Welle (130) in einer plattenartigen, Werkstücke verarbeitenden Maschine, einschliesslich :

    - zweier kreisförmigen Flansche (110, 120), die parallel und voneinander durch Distanzstücke (115) oder eine kreisförmige an der Peripherie der Flansche angeordnete Wand gehalten werden, wobei einer der Flansche (110) koaxial fest mit der ersten Welle oder dem Schwungrad (100) verbunden ist,

    - einer kreisförmigen Platte (150) und einer ebensolchen Gegenplatte (156) mit geringerem Durchmesser als die Flansche (110, 120), zwischen welchen die erwähnte Platte und Gegenplatte angeordnet sind, wobei die beiden letzteren über eine Nabe (140) eingeführt und an der zweiten Welle (130) aufgekeilt werden, auf welchem sie mit Querstücken verbunden sind, die derartig biegsam sind, dass sie sich in festem Verbund drehen lassen, jedoch in axialer Verschiebung im bezug auf diese Nabe beweglich sind, wobei die erwähnte Platte und die dazugehörige Gegenplatte je eine Friktionsscheibe (152, 158) auf der den enstpreschenden Flanschen gegenüberliegenden Seite trägt,

    - Wenigstens einer unter Druck einer Flüssigkeit dehnbaren Kammer (160) zwischen der Platte (150) und der Gegenplatte (156) zum Auseinanderrücken derselben mit dem Ziel, ihre Friktionsscheiben (152, 158) gegen ihre entsprechenden Flansche einzurücken,

    - der Rückzugmittel (230) zum Annähern der Platte und der Gegenplatte zueinander bei Nichtvorhandensein der Druckflüssigkeit in der oder den dehnbaren Kammern sowie zum Lösen der Friktionsscheiben von ihren entsprechenden Flanschen,

dadurch gekennzeichnet, dass die Nabe (140) grundsäzlich zylindrisch ausgebildet ist und mit ihrem Umfang im Querschnitt eine vieleckige Form mit abgerundeten Ecken und konkaven Seiten ausgebildet ist, wobei die Platte (150) und die Gegenplatte (156) einen konjugierten innen Umfang mit etwas grösseren Dimensionen aufweisen als der Nabenumfang,

sowie, dass die Koppelung der Platte und der Gegenplatte auf der Nabe mittels einer Reihe von aufeinanderliegenden, gleichförmigen Lamellen (170) erzielt wird, welche einerseits die Frontseite der Nabe (140) an ihren abgerundeten Ecken mit der Frontseite der Platte (150) in der Mitte der konkaven Seiten und andererseits die Vorderseite der Nabe (140) ebenfalls an den abgerundeten Ecken mit der Vorderseite der Gegenplatte (156) gleicherweise in der Mitte der konkaven Seiten verbinden.

2. Kupplung gemäss Patentanspruch 1, dadurch gekennzeichnet, dass die aufeinanderliegenden, gleichförmigen Lamellen mit einem Ende an den Seiten der Nabe (140) mit Hilfe einer zylindrischen Aschse (177) befestigt sind, welch letztere die erwähnte Nabe (140) an den abgerundeten Ecken durchquert, wobei die erwähnte zylindrische Achse ihrerseits von einer Schraube (175) zum Einspannen der aufeinanderliegenden Lamellen mit Hilfe einer Unterlagsscheibe (174) und einer Mutter (173) durchquert wird.

3. Kupplung gemäss Patentanspruch 2, dadurch gekennzeichnet, dass die gleichförmigen, aufeinanderliegenden Lamellen (170) mit einem Ende einerseits an der Frontseite der Platte (150) mittels eines konischen Drehzapfens (180) mit einem zylindrischen verlängerndem Lager (179) befestigt sind, wobei der konische Drehzapfen (180) mit einem Gewinde versehen ist, in welches die Schraube (178) zum Einspannen der aufeinanderliegenden, gleichförmigen Lamellen (170) an der erwähnten Frontseite der Platte (150) eingeschraubt wird sowie andererseits an der Vorderseite des Gegenplatte (156) mit Hilfe eines konischen Drehzapfens (180), ähnlich demjenigen, welcher zur Befestigung der aufeinanderliegenden Lamellen (170) an der Frontseite der Vorderplatte (150) verwendet wird.

4. Kupplung gemäss Patentanspruch 2, dadurch gekennzeichnet, dass die aufeinanderliegenden Lamellen (170) von den Vorder- bzw. Frontseiten der Nabe (140) oder der Platten (150, 156) sowie den Haltemitteln (175, 174, 178) der erwähnten Lamellen an der Nabe oder der Platte mit Hilfe von gleichschenkligen, dreieckigen Rückhaltern (171, 172, 182) entfernt gehalten werden, deren gegen die Drehachse der Kupplung gerichtete Dreieckspitze 180°/n beträgt.

**Claims**

1. Clutch coupling a first shaft or flywheel (100) to a second co-axial shaft (130) within a machine processing plate-shaped elements, comprising :

    - two circular flanges (110, 120) held in parallelism and apart from one another by means of struts (115) or a circular wall arranged on the periphery of the flanges, one of the flanges (110) being coaxially fitted on the first shaft or flywheel (100),

    - a circular plate (150) and a counter-plate (156) with a diameter smaller than the flanges (110, 120) between which they are situated, the said plate and counter-plate being slipped over a hub (140) cottered on the second shaft (130) to which they are attached by means of crosswise pieces able to bend in such a way as to effectuate a common rotation but be shiftable with axial translation with regard to the said hub, both the plate and the counter-plate holding a friction disk (152, 158) on the side opposite their respective flanges,
- at least one chamber (160) expandable under pressure of a fluid and arranged between the plate (150) and the counter-plate (156), enabling them to be kept apart from one another for engaging their friction disks (152, 158) with their respective flanges and
- pull-back means (230) approaching the plate to the counter-plate in the event of fluid under pressure lacking within the expandable chamber or chambers, disengaging the friction disks from their respective flanges,

characterised by the fact that the hub (140) is essentially cylindrical with a periphery having, viewed as a crosswise section, a polygonal shape with rounded corners and concave sides, the plate (150) and the counter-plate (156) having an inner polygonal correlative circumference of larger dimensions than the circumference of the hub,

and by the fact that the coupling of the plate and the counter-plate on the hub is achieved by means of a stack of identical lamellae (170) connecting respectively the front side of the hub (140) at its rounded corners to the front side of the plate (150) at the level of the centers of the concave sides on its inner polygonal circumference, and the fore side of the hub (140) equally at its rounded corners to the fore side of the counter-plate (156) equally at the level of the centers of the concave sides.

2. Clutch according to claim 1, characterised by stacks of identical lamellae (170) fitted at one of their ends on both sides of the hub (140) by means of a cylindrical axle (176) fitted across the said hub (140) in the area of its rounded corners, the said cylindrical axle holding a screw (175) the purpose of which is to tighten the lamellae together by means of a washer (174) and a nut (173).

3. Clutch according to claim 2, characterised by stacks of identical lamellae (170) fitted at their other end, on the one hand, against the front side of the plate (150) by means of a tapered stud (180) extending from a cylindrical support (179), the said tapered stud (180) being provided with a thread holding the screw (178) the purpose of which is to tighten the stack of identical lamellae (170) against the said front side of the plate (150), and, on the other hand, to the fore side of the counter-plate (156) by means of a tapered stud (180) similar to the one used for fitting the lamellae stacks (170) on the front side of the plate (150).

4. Clutch according to claim 2, characterised by the stack of lamellae (170) being held at an adequate distance from the front or fore sides of the hub (140) or the plates (150, 156) as well as from the holding means (175, 174, 178) of the said lamellae on the hub or plate by isosceles triangular distance pieces (171, 712, 182) the apex of which directed towards the rotatary axis of the clutch is equal to 180°/n.

Fig 1

Fig 2

Fig 3

Fig 4

170
210
220
230
200
150
156

Fig 5